# EUROPÄISCHE PATENTSCHRIFT

(11) **EP 0 940 328 B1**
(45) Veröffentlichungstag und Bekanntmachung des Hinweises auf die Patenterteilung: **21.05.2003**
(21) Anmeldenummer: 99103600.5
(22) Anmeldetag: 24.02.1999
(51) Int. Cl.: B62D 53/08

(54) **Sattelkupplung zur Direktmontage auf einem Hilfsrahmen**
Fifth wheel for direct mounting on an auxiliary frame
Selette d'attelage pour montage direct sur un châssis auxiliaire

(30) Priorität: 04.03.1998 CH 51698
(43) Veröffentlichungstag der Anmeldung: 08.09.1999
(73) Patentinhaber: Georg Fischer Verkehrstechnik GmbH, 78221 Singen (DE)
(72) Erfinder: Roth-Schuler, Christian, 78224 Singen (DE); Kreutzarek, Udo, 78253 Eigeltingen (DE)
(74) Vertreter: Weiss, Wolfgang, Dr.

(56) Entgegenhaltungen:
- EP-A- 0 030 987
- EP-A- 0 066 355
- EP-A- 0 522 851
- EP-A- 0 694 467
- US-A- 5 707 070

## Beschreibung

Die Erfindung betrifft eine Sattelkupplung mit einer Kupplungsplatte und zwei die Kupplungsplatte tragenden Lagerböcken mit einem Fussteil zur direkten Montage auf einem an einem Zugfahrzeug festgelegten Hilfsrahmen, wobei die Lagerböcke über wenigstens eine Querstrebe lösbar miteinander verbunden sind.

Bei einer bekannten Befestigungsart wird die Sattelkupplung über die Lagerböcke auf eine Montageplatte geschraubt und die Montageplatte an einem Hilfsrahmen des Zugfahrzeuges befestigt.

Aus der EP 694 467 A2 ist ein gattungsgemässer Bausatz einer Sattelkupplung bekannt. Damit die Sattelkupplungsplatte um eine Achse Q, die quer zur Fahrzeugrichtung vertäuft, schwenkbar gelagert werden kann, sind zwei die Kupplungsplatte tragenden Lagerböcke vorgesehen, die mit dem Rahmen des Zugfahrzeuges verbunden sind. Die Lagerböcke bestehen jeweils aus einem sogenannten Hammerkopf aus Guss- oder Schmiedestahl und einem Fussteil mit einem L-förmigen Profil. Die Fussteile sind mittels einer Schraubverbindung mit einem Hilfsrahmenteil an beiden Seiten des Zugfahrzeugrahmens verbunden. Zur Verbindung der beiden Lagerböcken ist eine Querstrebe angeordnet, die als ein U-förmiges Profil ausgebildet ist und die mit Schraubbolzen lösbar befestigt ist. Die Schraubbolzen, welche die beiden Enden des U-Profils mit den Lagerböcken verbinden, befinden sich an einem schwer zugänglichen Ort zwischen dem Zugfahrzeugrahmen und der Sattelkupplungsplatte.

Der vorliegenden Erfindung liegt die Aufgabe zugrunde, eine Sattelkupplung der eingangs genannten Art so auszugestalten, dass eine einfache und betriebssichere Direktmontage auf einem Hilfsrahmen möglich wird.

Zur erfindungsgemässen Lösung der Aufgabe führt, dass die Querstrebe als eine Rundstange mit endseitig angepressten Achsstummeln ausgebildet ist. Zweckmässigerweise ist die Querstrebe stirnseitig mit dem Fussteil des Lagerbockes verschraubt.

Bei einer bevorzugten Anbindungsart der Querstrebe am Lagerbock durchdringen die Achsstummel zumindest eine Wand im Fussteil und sind über ein endständiges Gewindeteil mit einer Sicherungsmutter verschraubt .

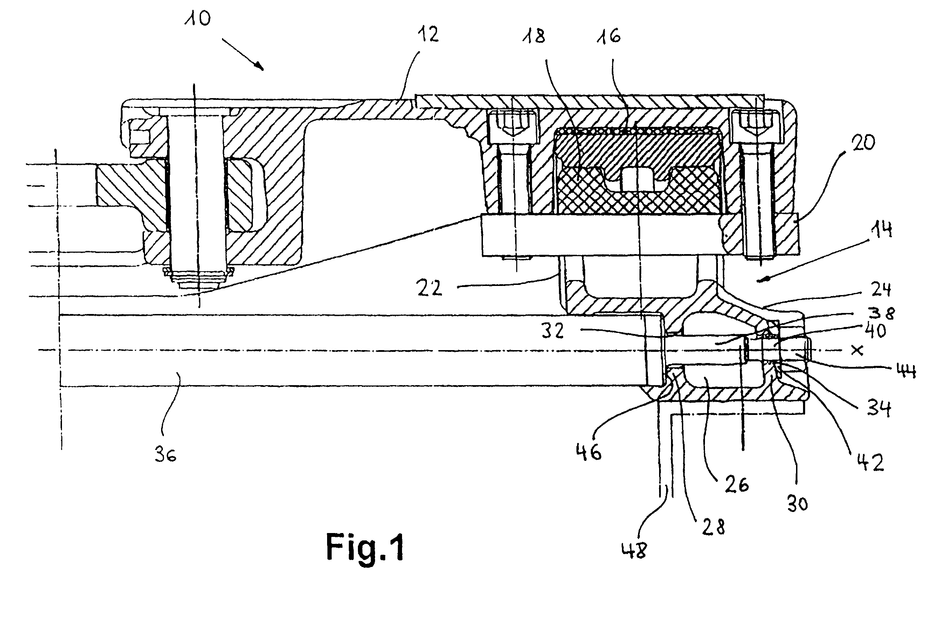

Besonders bevorzugt ist eine Ausführungsform, bei welcher das Fussteil einen kastenförmigen Teil mit einer inneren Wand und einer äusseren Wand aufweist und die Achsstummel beide Wände über konzentrisch zur Querstrebenachse angeordnete Öffnungen durchdringen, wobei jeweils ein Schulterbereich jedes Achsstummels der inneren Wand anliegt und die Sicherungsmutter unter Ausbildung einer kraftschlüssigen Verbindung gegen die äussere Wand verspannt ist. Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Querschnitt durch einen Teil einer Sattelkupplung.

Bei einer in Fig. 1 dargestellten Sattelkupplung 10 ist eine Kupplungsplatte 12 dem Kopfteil 22 eines gegossenen Lagerbockes 14 aufgesetzt und an diesem unter Zwischenordnung eines Kunststofflagers 16 sowie einer Gummidämpfung 18 durch Verschraubung mit einer dem Kopfteil 22 durchsetzenden Welle 20 gehalten. Der Fussteil 24 des Lagerbockes 14 umfasst einen kastenförmigen Teil 26 mit einer inneren Wand 28 und einer äusseren Wand 30. Die voneinander beabstandeten Wände 28, 30 weisen konzentrisch zueinander angeordnete Bohrungen bzw. Öffnungen 32, 34 auf.

Eine Querstrebe 36 in Form einer Rundstange mit endständig angepressten Achsstummeln 38 dient der starren Verbindung der zwei Lagerböcke 14 der Sattelkupplung 10. Hierbei durchdringt jeder Achsstummel 38 in Richtung der Querstrebenachse x die Öffnungen 32, 34 in den beiden Wänden 28, 30 des Fussteils 24. Die Anbindung der Querstrebe 36 am Fussteil 24 des Lagerbockes 14 erfolgt durch Verschraubung eines endständig an den Achsstummeln 38 angeordneten Gewindeteiles 40 mit einer Sicherungsmutter 44.

Durch Anziehen der Sicherungsmutter 44, die über eine Unterlegscheibe 42 gegen die äussere Wand, 30 verspannt wird, wird ein Schulterbereich 46 des Achsstummels 38 gegen die innere Wand 28 des Fussteils 24 gezogen, so dass insgesamt eine kraftschlüssige Verbindung zwischen Querstrebe 36 und Lagerbock 14 hergestellt wird.

Die Sattelkupplung 10 wird über die Fussteile 24 direkt auf einen Hilfsrahmen 48 eines Zugfahrzeuges geschraubt, wobei die Querstrebe 36 mit ihrer Achse x quer zur Fahrzeuglängsrichtung liegt.

## Patentansprüche

1. Sattelkupplung mit einer Kupplungsplatte (12) und zwei die Kupplungsplatte (12) tragenden Lagerböcken (14) mit einem Fussteil (24) zur direkten Montage auf einem an einem Zugfahrzeug festgelegten Hilfsrahmen (48), wobei die Lagerböcke (14) über wenigstens eine Querstrebe (36) lösbar miteinander verbunden sind, **dadurch gekennzeichnet dass** die Querstrebe als eine Rundstange mit endseitig angepressten Achsstummeln (38) ausgebildet ist.

2. Sattelkupplung nach Anspruch 1, **dadurch gekennzeichnet, dass** die Querstrebe (36) stirnseitig mit dem Fussteil (24) des Lagerbockes (14) verschraubt ist.

3. Sattelkupplung nach Anspruch 2, **dadurch gekennzeichnet, dass** die Achsstummel (38) zumindest eine Wand (28, 30) im Fussteil (24) durchdringen und über ein endständiges Gewindeteil (40) mit einer Sicherungsmutter (44) verschraubt sind.

4. Sattelkupplung nach Anspruch 3, **dadurch gekennzeichnet, dass** der Fussteil (24) einen kastenförmigen Teil (26) mit einer inneren Wand (28) und einer äusseren Wand (30) aufweist und die Achsstummel (38) beide Wände (28,30) über konzentrisch zur Querstrebenachse (x) angeordnete Öffnungen (32,34) durchdringen, wobei jeweils ein Schulterbereich (46) jedes Achsstummels (38) der inneren Wand (28) anliegt und die Sicherungsmutter (44) unter Ausbildung einer kraftschlüssigen Verbindung gegen die äussere Wand (30) verspannt ist.

## Claims

1. Fifth wheel with a coupling plate (12) and with two bearing blocks (14) carrying the coupling plate (12) and having a foot part (24) for direct mounting on an auxiliary frame (48) secured to a traction vehicle, the bearing blocks (14) being connected releasably to one another via at least one transverse strut (36), **characterized in that** the transverse strut is designed as a round rod with axle stubs (38) pressed onto the end faces.

2. Fifth wheel according to Claim 1, **characterized in that** the transverse strut (36) is screwed on the end faces to the foot part (24) of the bearing block (14).

3. Fifth wheel according to Claim 2, **characterized in that** the axle stubs (38) pass through at least one wall (28, 30) in the foot part (24) and are screwed to a retaining nut (44) via a threaded end part (40).

4. Fifth wheel according to Claim 3, **characterized in that** the foot part (24) has a box-shaped part (26) with an inner wall (28) and with an outer wall (30), and the axle stubs (38) pass through both walls (28, 30) via orifices (32, 34) arranged concentrically to the transverse-strut axis (x), in each case a shoulder region (46) of each axle stub (38) bearing on the inner wall (28), and the retaining nut (44) being braced against the outer wall (30) so as to form a non-positive connection.

## Revendications

1. Sellette comprenant une plaque d'accouplement (12) et deux supports (14) supportant la plaque d'accouplement (12) munis d'une base (24) pour le montage direct sur un cadre auxiliaire (48) fixé à un véhicule, les supports (14) étant reliés entre eux de manière amovible par le biais d'au moins une traverse (36), **caractérisée en ce que** la traverse est réalisée sous la forme d'une barre ronde aux extrémités de laquelle sont embouties à la presse des fusées d'essieu (38).

2. Sellette selon la revendication 1, **caractérisée en ce que** la traverse (36) est vissée du côté frontal avec la base (24) du support (14).

3. Sellette selon la revendication 2, **caractérisée en ce que** la fusée d'essieu (38) traverse au moins une paroi (28, 30) dans la base (24) et elle est fixée par vissage par le biais d'une partie filetée terminale (40) avec un contre-écrou (44).

4. Sellette selon la revendication 3, **caractérisée en ce que** la base (24) présente une partie en caisson (26) comportant une paroi interne (28) et une paroi externe (30) et la fusée d'essieu (38) traverse les deux parois (28, 30) à travers des orifices (32, 34) disposés de manière concentrique par rapport à l'axe de la traverse (x), une zone d'épaulement (46) de chaque fusée d'essieu (38) étant à chaque fois appliquée contre la paroi intérieure (28) et le contre-écrou (44) étant serré contre la paroi extérieure (30) en réalisant une liaison à fermeture par adhérence.
